# FASCICULE DE BREVET EUROPEEN

(11) **EP 3 728 795 B1**
(45) Date de publication et mention de la délivrance du brevet: **06.04.2022**
(21) Numéro de dépôt: 18842529.2
(22) Date de dépôt: 13.12.2018
(51) Int. Cl.: F01D 11/00, F02C 7/28, F01D 25/18, F01D 25/34

(54) **ETANCHEITE DYNAMIQUE ENTRE DEUX ROTORS D'UNE TURBOMACHINE D'AERONEF**
DYNAMISCHE DICHTUNG ZWISCHEN ZWEI ROTOREN EINER FLUG-GASTURBINE
DYNAMIC SEAL BETWEEN TWO ROTORS OF AN AIRCRAFT GAS TURBINE

(30) Priorité: 22.12.2017 FR 1763044
(43) Date de publication de la demande: 28.10.2020
(73) Titulaire: SAFRAN AIRCRAFT ENGINES, 75015 Paris (FR)
(72) Inventeur: BRAULT, Michel, Gilbert, Roland, 77550 MOISSY-CRAMAYEL (FR); BECOULET, Julien, Fabien, Patrick, 77550 MOISSY-CRAMAYEL (FR); CUVILLIER, Romain, Guillaume, 77550 MOISSY-CRAMAYEL (FR); NEGRI, Arnaud, 91330 Yerres (FR)
(74) Mandataire: Gevers & Orès
(86) Numéro de dépôt international: PCT/FR2018/053286
(87) Numéro de publication internationale: WO 2019/122625

(56) Documents cités:
- US-A1- 2015 300 255
- US-A1- 2015 300 255
- US-A1- 2017 051 823
- US-A1- 2017 051 823
- US-A1- 2017 241 290
- US-A1- 2017 241 290

## Description

### DOMAINE TECHNIQUE

La présente invention concerne le domaine de l'étanchéité dynamique entre deux rotors d'une turbomachine d'aéronef, et en particulier une turbomachine équipée d'un réducteur épicycloïdal ou planétaire.

### ETAT DE L'ART

L'état de l'art comprend notamment les documents FR-A1-2 983 908, WO-A1-2015/075345, US-A1-2017/241290, US-A1-2017/051823, US-A1-2015/300255 et WO-A1-2015/075355.

Une turbomachine, telle qu'un turboréacteur à double flux, comprend classiquement une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine et formant le flux primaire sont mélangés au flux secondaire.

Dans le cas d'un turboréacteur à réducteur, l'arbre de turbine entraîne l'arbre de soufflante par l'intermédiaire du réducteur qui est lubrifié et logé dans une enceinte amont de lubrification. Selon le type de réducteur utilisé, planétaire ou épicycloïdal, l'arbre de soufflante va tourner dans le même sens ou dans le sens contraire à l'arbre de turbine, et l'arbre de soufflante va tourner à une vitesse moins importante que celle de l'arbre de turbine.

Des moyens d'étanchéité sont prévus aux bornes de l'enceinte de lubrification afin de maîtriser les fuites d'huile et les orienter préférentiellement vers des moyens de dégazage. Le document WO-A1-2015/075355 décrit par exemple des moyens d'étanchéité dynamique, du type à labyrinthe, prévus entre l'arbre de soufflante et l'arbre d'entrée du réducteur.

La présente invention apporte un perfectionnement à la technologie actuelle.

### EXPOSE DE L'INVENTION

Selon un premier aspect, l'invention concerne une turbomachine d'aéronef d'axe longitudinal A, comportant un réducteur, au moins un arbre de turbine dont une extrémité amont est reliée à un arbre d'entrée du réducteur, une soufflante dont un arbre est relié à un arbre de sortie du réducteur, et des moyens d'étanchéité dynamique entre ledit arbre d'entrée du réducteur et ledit arbre de soufflante, caractérisée en ce que lesdits moyens d'étanchéité comprennent un capot annulaire à section axiale sensiblement en U dont une branche annulaire externe est fixée audit arbre de soufflante et dont une branche annulaire interne porte au moins un joint annulaire d'étanchéité coopérant avec ledit arbre d'entrée du réducteur, ledit capot étant élastiquement déformable en direction radiale par rapport audit axe A.

Le capot est élastiquement déformable en direction radiale ce qui confère une certaine souplesse aux moyens d'étanchéité dans cette direction et autorise ainsi des désalignements des arbres en fonctionnement. Le ou les joints d'étanchéité sont ainsi plus efficaces et garantissent ainsi une calibration d'un débit d'air de ventilation et/ou une limitation de passage d'huile entre l'arbre d'entrée du réducteur et l'arbre de sortie du réducteur.

La turbomachine selon l'invention peut comprendre une ou plusieurs des caractéristiques suivantes, prises isolément les unes des autres ou en combinaison les unes avec les autres :
- ledit capot en U définit une ouverture annulaire débouchant axialement vers l'aval ;
- ladite branche annulaire externe comprend une extrémité aval de fixation audit arbre de soufflante ;
- ladite branche annulaire externe et ledit arbre de soufflante définissent entre eux un espace annulaire d'écoulement de fluide qui est en communication fluidique avec des orifices formés dans ledit arbre de soufflante ;
- l'extrémité aval de ladite branche annulaire externe comprend des orifices de passage d'huile ;
- l'extrémité aval de ladite branche annulaire externe porte un capotage annulaire s'étendant radialement vers l'intérieur et configuré pour limiter les projections d'huile et/ou assurer l'écoulement d'huile ;
- ladite branche annulaire interne comprend une nervure annulaire radialement externe configurée pour limiter les projections d'huile et/ou assurer l'écoulement d'huile ;
- ladite branche annulaire interne s'étend au moins en partie radialement à l'intérieur dudit arbre d'entrée du réducteur ;
- ledit au moins un joint annulaire comprend des segments annulaires d'étanchéité qui sont chacun montés coulissant en direction radiale dans des fentes annulaires de ladite branche annulaire interne et qui sont configurés pour prendre appui à leur périphérie externe sur ledit arbre d'entrée du réducteur ;
- lesdits segments annulaires ont chacun en section axiale une forme générale rectangulaire dont les coins sont arrondis convexes ;- ledit arbre d'entrée du réducteur comprend au moins une piste cylindrique durcie destinée à coopérer avec ledit au moins un joint, et/ou des orifices radiaux traversants de passage d'huile.

Selon un autre aspect, l'invention concerne un dispositif d'étanchéité dynamique pour une turbomachine d'aéronef, comportant deux rotors configurés pour tourner autour d'un même axe et à des vitesses différentes, lesdits rotors s'étendant au moins en partie l'un autour de l'autre et des moyens d'étanchéité dynamique étant montés entre lesdits rotors, caractérisé en ce que :
- lesdits moyens d'étanchéité comprennent des segments annulaires s'étendant autour dudit axe, ces segments étant montés coulissant sur un premier desdits rotors, en direction radiale par rapport audit axe, et étant aptes à prendre appui radialement par leur périphérie externe sur un second desdits rotors qui entoure au moins partiellement ledit premier rotor, et en ce qu'il comprend en outre :
- des moyens d'évacuation d'huile comportant une cavité annulaire formée dans ledit second rotor, ladite cavité annulaire débouchant radialement vers l'intérieur au voisinage desdits moyens d'étanchéité et étant en communication fluidique avec des orifices de passage d'huile formés au fond de la cavité et traversant ledit second rotor.

Le dispositif propose ainsi de combiner deux fonctions pour optimiser les propriétés d'étanchéité. La première fonction est assurée par les segments d'étanchéité dont le nombre est choisi pour garantir une étanchéité optimale. Ils sont par exemple configurés pour limiter le passage d'huile et/ou calibrer un débit d'air de ventilation d'une enceinte de lubrification. La seconde fonction est assurée par la cavité et les orifices qui permettent l'évacuation d'huile.

Le dispositif selon l'invention peut comprendre une ou plusieurs des caractéristiques suivantes, prises isolément les unes des autres ou en combinaison les unes avec les autres :
- lesdits moyens d'étanchéité comprennent entre trois et six segments annulaires ;
- lesdits segments annulaires sont montés coulissants indépendamment les uns des autres dans des fentes annulaires dudit premier rotor ;
- lesdits segments annulaires ont chacun en section axiale une forme générale rectangulaire dont les coins sont arrondis convexes ;
- lesdits segments annulaires sont répartis par paire(s) ou trio(s) ;
- lesdits segments annulaires sont situés d'un côté de ladite cavité annulaire ou sont répartis des deux côtés de ladite cavité annulaire ;
- ledit second rotor comprend au moins une piste cylindrique durcie et sur laquelle sont en appui lesdits segments annulaires ;
- ladite au moins une piste cylindrique est reliée à une extrémité axiale à une surface tronconique configurée pour faciliter le montage par insertion desdits premier et second rotors ;
- le dispositif comprend en outre une nervure annulaire radialement externe de guidage d'huile, qui est portée par ou montée sur ledit premier rotor, et configurée pour guider de l'huile jusqu'à ladite cavité annulaire ;
- lesdits moyens d'étanchéité sont formés par l'assemblage de plusieurs pièces annulaires montées coaxialement sur ledit premier rotor et serrées axialement les unes sur les autres au moyen d'un écrou vissé sur ledit premier rotor.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en coupe axiale d'une turbomachine à réducteur d'aéronef,
- la figure 2 est une vue schématique à plus grande échelle d'une partie de la figure 1, et montre des moyens d'étanchéité de la technique antérieure,
- les figures 3 et 4 sont des vues schématiques partielles en coupe axiale d'une turbomachine d'aéronef selon l'invention,
- la figure 5 est une vue schématique partielle en coupe axiale d'un dispositif d'étanchéité dynamique selon l'invention,
- la figure 6 est une vue schématique partielle en coupe axiale d'un mode de réalisation de moyens d'étanchéité dynamique selon l'invention,
- la figure 7 est une vue schématique à plus grande échelle d'un détail de la figure 6,
- les figures 8 et 9 sont des vues schématiques similaires à celle de la figure 6 et montrant des variantes de réalisation des moyens d'étanchéité dynamique, et
- la figure 10 est une vue schématique à plus grande échelle d'un détail de la figure 5.

### DESCRIPTION DETAILLEE

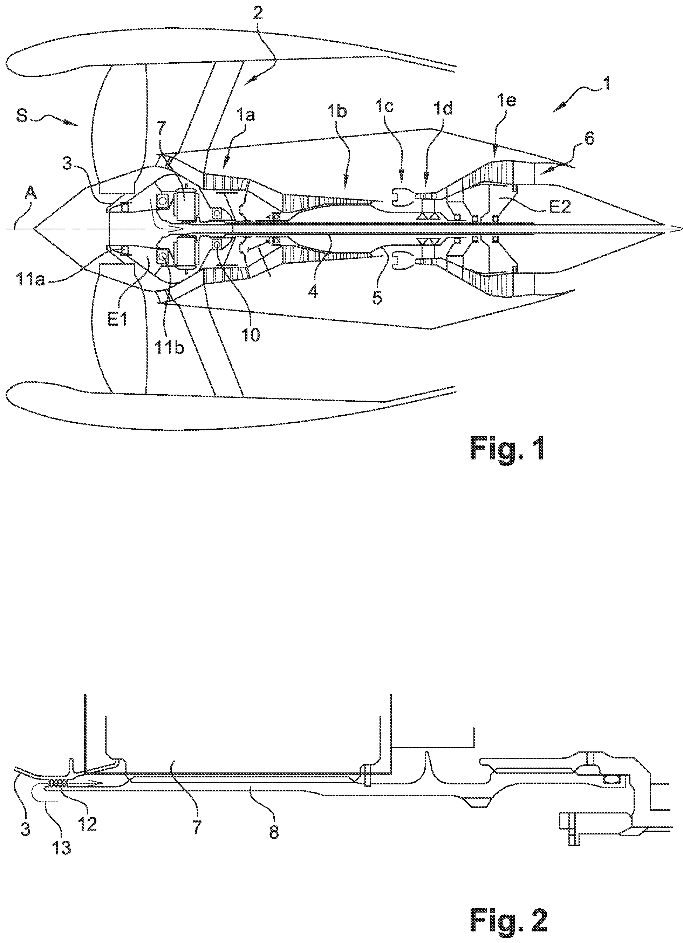

En se référant à la figure 1, on voit une turbomachine 1 à réducteur, qui comporte, de manière classique, une soufflante S, un compresseur basse pression 1a, un compresseur haute pression 1b, une chambre de combustion 1c, une turbine haute pression 1d et une turbine basse pression 1e. Les rotors du compresseur haute pression 1b et de la turbine haute pression 1d sont reliés par un arbre haute pression 5 et forment avec lui un corps haute pression (HP). Les rotors du compresseur basse pression 1a et de la turbine basse pression 1e sont reliés par un arbre basse pression 4 et forment avec lui un corps basse pression (BP). L'arbre 3 de soufflante S est entrainé par l'intermédiaire d'un réducteur 7 par l'arbre BP 4

Les arbres HP et BP s'étendent suivant un axe A qui est l'axe de rotation de la turbomachine 1. Dans la suite de la description, les notions de longitudinal ou radial, et d'intérieur ou extérieur, sont relatives à cet axe.

La turbomachine 1 comprend des carters structuraux. Le corps HP est tenu par deux carters structuraux : le carter inter-compresseur et le carter inter-turbine et le corps BP est tenu par au moins deux carters structuraux : le carter intermédiaire 2 et le carter inter-turbine et/ou le carter d'échappement 6.

Le carter intermédiaire 2 soutient des paliers de l'arbre de turbine BP 4 qui sont logés dans une enceinte avant ou amont notée E1. Le carter d'échappement 6 soutient des paliers de l'arbre de turbine BP 4 qui sont logés dans une enceinte arrière ou aval notée E2.

Le réducteur 7 est ici de type épicycloïdal. La figure 1 montre de manière très schématique l'encombrement des satellites de ce réducteur. Le réducteur 7 comprend un arbre d'entrée 8 s'étendant en amont de l'arbre BP 4 et qui est guidé par un palier 10 aval porteur de cet arbre BP. Le couple en sortie de ce réducteur 7 est transmis à l'arbre de soufflante 3, par une liaison classique, comme par exemple une fixation de cet arbre de soufflante sur le porte-satellites formant un arbre de sortie du réducteur, dans le cas d'un réducteur épicycloïdal. L'arbre de sortie du réducteur est guidé par d'autres paliers 11a, 11b, préférentiellement un palier 11a à rouleaux et un palier 11b à billes.

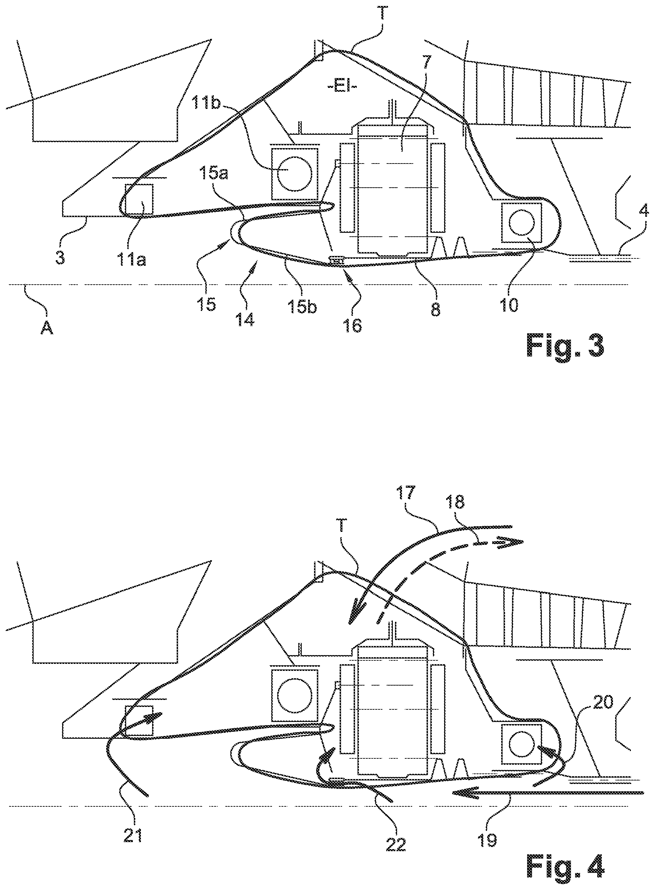

Comme cela est visible aux figures 3 et 4, les paliers 10, 11a, 11b ainsi que le réducteur 7 sont situés à l'intérieur de l'enceinte avant E1 de lubrification délimitée par un trait continu T.

L'enceinte E1 est délimitée par des parois fixes et des parois mobiles. Les supports des paliers forment des parois fixes et les arbres forment des parois mobiles.

Les arbres d'entrée 8 du réducteur et l'arbre de soufflante 3 tournent à des vitesses différentes et des moyens d'étanchéité sont montés entre eux. La figure 2 représente des moyens d'étanchéité 12 du type à labyrinthe de la technique antérieure, qui sont configurés pour permettre le passage d'un débit de gaz de pressurisation à l'intérieur de l'enceinte en fonctionnement (flèche 13).

Les figures 3 et 4 représentent des moyens d'étanchéité 14 selon l'invention, qui représentent un perfectionnement par rapport à la technique antérieure.

Dans l'exemple représenté, les moyens d'étanchéité 14 délimitent en partie l'enceinte E1 et comprennent un capot annulaire 15 à section axiale sensiblement en U dont une branche annulaire externe 15a est fixée à l'arbre de soufflante 3 et dont une branche annulaire interne 15b porte au moins un joint annulaire d'étanchéité 16 coopérant avec l'arbre d'entrée 8 du réducteur.

La forme en U du capot 15 lui permet d'être élastiquement déformable en direction radiale par rapport à l'axe A et de compenser des désalignements des arbres 3, 8 tout en garantissant une étanchéité entre ces arbre grâce au(x) joint(s) 16.

Comme cela est schématiquement représenté à la figure 4, les paliers 10, 11a et 11b ainsi que le réducteur 7 sont lubrifiés pour optimiser leur fonctionnement. L'huile est amenée par des moyens appropriés (flèches 17). Ces moyens sont généralement des canalisations et des gicleurs visant les éléments à lubrifier. Les paliers 10, 11a sont situés aux extrémités axiales de l'enceinte E1. Les supports de palier comprennent des trous de ventilation qui laissent passer de l'air de ventilation de l'enceinte. L'enceinte E1 est configurée pour que le mélange air-huile, qui forme un brouillard d'huile à l'intérieur de l'enceinte, soit contenu dans cette dernière. Entre les parois de rotor et de stator de l'enceinte, par exemple ici aux extrémités amont et aval de l'enceinte les moyens d'étanchéité (telles que des labyrinthes) permettent de contenir l'huile, et un circuit d'air vient pressuriser ces étanchéités pour éviter les fuites d'huile. Les moyens d'étanchéité peuvent également être entre deux parois mobiles, comme c'est le cas d'une étanchéité entre deux arbres, et en particulier entre les arbres 3, 8. Un débit de gaz est prélevé du compresseur BP ou HP de la turbomachine et alimente toutes les étanchéités de l'enceinte E1. La flèche 19 représente l'alimentation commune qui se répartie en plusieurs flux (flèches 20, 21, 22) traversant les différentes étanchéités.

L'enceinte E1 se trouve alors pressurisée (de l'air y entre en continu, repoussant l'huile qui aurait pu sortir des étanchéités par capillarité) et les paliers fonctionnent dans un milieu d'huile et d'air mélangés. L'huile reste contenue dans le circuit de lubrification. L'alimentation des paliers est assurée par un tube d'alimentation et la récupération huile et assurée par un tube de récupération spécifique placé en général à un point bas de l'enceinte. Pour éviter une surpression de l'enceinte, et permettre un flux constant d'air entrant, l'intérieur de l'enceinte est mise à l'air à pression plus faible que la pression de l'air entrant dans les étanchéités. Cet air chargé de particules d'huile, qui est évacué au niveau de ce puits de pression, doit d'abord être traité pour récupérer la quasi-totalité de l'huile qu'il véhicule. Pour cela, l'air huilé sera amené à un déshuileur qui séparera l'air de l'huile qu'il véhicule et rejettera l'air déshuilé à l'extérieur du moteur.

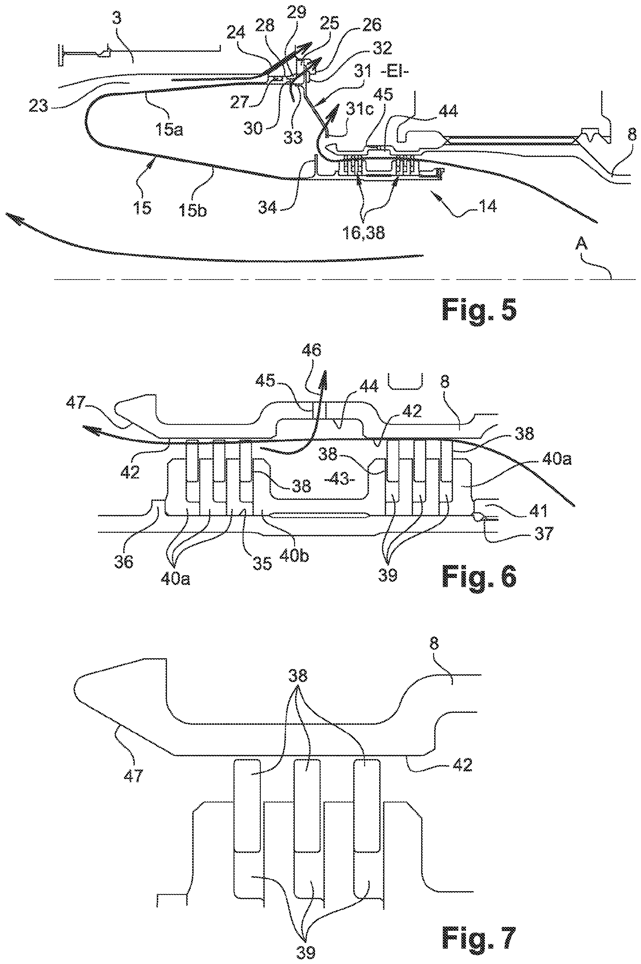

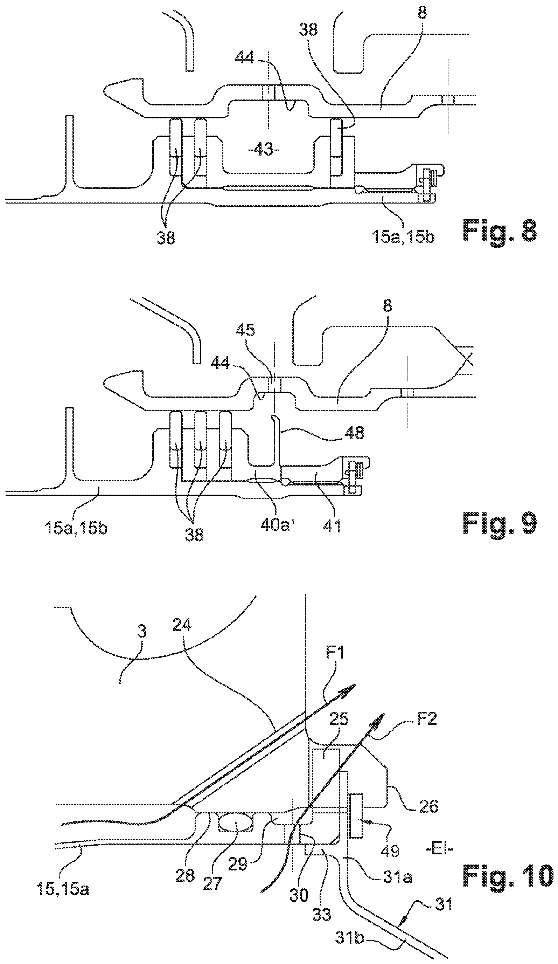

La figure 5 illustre un mode de réalisation plus concret des moyens d'étanchéité 14, et la figure 10 montre un détail à plus grande échelle de la figure 5.

En ce qui concerne le capot en U 15, on peut noter qu'il définit une ouverture annulaire qui débouche axialement vers l'aval dans l'exemple représenté. Cette ouverture débouche dans l'enceinte E1 et forme donc une partie de cette dernière. Elle contient donc un brouillard d'huile en fonctionnement.

La branche annulaire externe 15a du capot 15 a une forme générale cylindrique ou tronconique et s'étend sensiblement parallèlement et à faible distance radiale d'une portion de l'arbre 3. La branche 15a et l'arbre 3 définissent entre eux un espace annulaire 23. L'arbre 3 comprend une rangée annulaire d'orifices 24 traversants qui débouchent, d'une part à l'amont, dans l'espace 23, et d'autre part à l'aval, dans l'enceinte E1. L'espace 23 est donc en communication fluidique avec l'enceinte E1 par les orifices 24. Dans l'exemple représenté, les orifices 24 s'étendent, de l'amont vers l'aval, radialement vers l'extérieur. En fonctionnement, l'huile qui pénètrerait dans l'espace 23 serait acheminée jusqu'aux orifices 24 et retournerait donc dans l'enceinte E1 (flèche F1).

La branche externe 15a comprend à son extrémité aval des moyens de fixation à l'arbre 3. Dans l'exemple représenté, ces moyens de fixation comprennent un rebord annulaire radialement externe 25, qui est crénelé et comprend une rangée annulaire d'encoches axiales définissant entre elles des dents. Cette extrémité est engagée par crabotage dans un rebord cylindrique 26 complémentaire de l'arbre 3. Ce rebord 26 comprend une rangée annulaire d'encoches radiales définissant entre elles des dents. Les dents du rebord 25 sont destinées à être engagées dans les encoches du rebord 26, et les dents du rebord 26 sont destinées à être engagées dans les encoches du rebord 25. Les dents coopèrent entre elles pour former une anti-rotation. Le nombre de dents par rebord 25, 26 est par exemple compris entre 1 et 10.

Le montage du capot 15 l'arbre 3 peut se faire par simple translation axiale de l'un vers l'autre, jusqu'à l'engagement des dents précitées.

Le capot 15 et l'arbre 3 sont immobilisés axialement l'un vis-à-vis de l'autre par un segment annulaire 49 engagé dans une rainure annulaire du rebord 26, qui débouche radialement vers l'intérieur.

L'extrémité aval de la branche 15a comprend en outre une rainure annulaire externe qui débouche radialement vers l'extérieur et dans laquelle est logé un joint torique d'étanchéité 27, serré entre le fond de cette rainure et l'arbre 3. La rainure est ici formée dans une surépaisseur radiale de la branche 15a qui comprend une surface cylindrique externe qui coopère avec une surface cylindrique interne 28 complémentaire de l'arbre 3 en vue du centrage du capot. Le capot 15 peut être retenu axialement en place par frettage de ces surfaces cylindriques lors du montage. La surface 28 s'étend axialement entre les débouchés des orifices 24 dans l'espace 23, et une surface radiale aval de l'arbre 3.

Entre la surface cylindrique externe et le rebord 25, la branche 15a peut comprendre une gorge annulaire radialement externe 29. Des orifices radiaux 30 traversants sont formés dans la branche 15a et débouchent dans cette gorge 29 pour autoriser le passage d'huile radialement de l'intérieur vers l'extérieur, depuis l'ouverture définie par le capot 15 jusqu'au reste de l'enceinte E1 (flèche F2). L'huile s'écoulera ensuite entre les dents précitées des rebords 25, 26.

L'extrémité aval de la branche 15a porte un capotage annulaire 31 s'étendant radialement vers l'intérieur et configuré pour limiter les projections d'huile et/ou assurer l'écoulement d'huile. Le capotage 31 comprend ici une partie radialement externe 31a sensiblement radiale, une partie médiane 31b sensiblement tronconique évasée ici vers l'amont, et une partie radialement interne radiale 31c. La partie radialement externe 31a est plaquée axialement sur le rebord 25 de la branche 15a par le segment S. Cette partie 31a est dentelée, ses dents étant alignées avec les dents du rebord 25 et engagées avec les dents du rebord 25, entre les dents du rebord 26. La partie radialement externe 31a du capotage 31 comprend en outre un rebord cylindrique 33 orienté vers l'amont et coopérant par centrage avec une surface cylindrique interne de l'extrémité aval de la branche 15a.

L'huile qui passe dans le volume du capot 15, malgré le capotage annulaire 31, n'est ainsi pas retenue par ce dernier mais évacuée grâce aux orifices radiaux 30 et à travers les dents des rebords 25 et 26.

La partie radialement interne 31c du capotage 31 s'étend sensiblement au droit de l'extrémité amont de l'arbre d'entrée 8 du réducteur.

L'extrémité amont du capot 15 a en section axiale une forme générale arrondie. La branche annulaire interne 15 du capot comprend une partie d'extrémité aval qui est située radialement à l'intérieur d'une partie d'extrémité amont de l'arbre 8. Le(s) joint(s) d'étanchéité 16 sont situés dans l'espace radial s'étendant entre ces parties d'extrémité.

La branche annulaire interne 15b comprend, sur cette partie d'extrémité aval, une nervure annulaire radialement externe 34 qui s'étend ici dans un plan radial, ce plan étant situé en amont de l'extrémité amont de l'arbre 8 et traversant la partie médiane du capotage 31. La nervure 34 forme un raidisseur, pour que la branche 15 conserve une bonne circularité. Avantageusement, elle est en outre configurée pour limiter les projections d'huile et/ou assurer l'écoulement d'huile. La nervure 34 est située à l'extrémité amont d'une surépaisseur radiale de la branche 15b dans l'exemple représenté.

La partie d'extrémité aval de la branche 15b comprend une surface cylindrique externe 35 sur lequel sont montés le(s) joint(s) d'étanchéité 16. Cette surface 35 s'étend axialement entre un rebord annulaire radialement externe 36, à l'amont, et un filetage externe 37, à l'aval (figure 6).

Les figures 6 et 7 représentent un premier mode de réalisation de joints d'étanchéité qui sont des segments annulaires 38 d'étanchéité.

Les segments 38 sont chacun montés coulissant en direction radiale sur la branche 15b et sont configurés pour prendre appui à leur périphérie externe sur l'arbre d'entrée 8 du réducteur.

Les segments 38 s'étendent autour de l'axe A et ont leur périphérie interne montée de manière coulissante radialement dans des fentes radiales 39 qui sont ici formées par l'assemblage de plusieurs pièces annulaires.

Chaque fente 39 est délimitée axialement par deux anneaux 40a, 40b montés axialement l'un contre l'autre, en les engageant sur la surface cylindrique 35 de la branche 15b. Certains anneaux, comme les anneaux 40a, ont une faible dimension axiale et s'étendent entre deux segments 38 adjacents en les espaçant l'un de l'autre d'une faible distance axiale. D'autres anneaux, comme l'anneau 40b, a une plus grande dimension axiale et s'étend entre deux segments 38 adjacents en les espaçant l'un de l'autre d'une plus grande distance axiale. Ceci permet de répartir les segments 38 le long de la surface 35 et de les répartir par paire, trio ou autre.

Dans l'exemple représenté, six segments 38 sont montés autour de la branche 15b. Ils sont répartis par trio, un premier trio amont dans lequel les segments sont intercalés les uns des autres par des anneaux 40a, et un second trio aval dans lequel les segments sont intercalés les uns des autres par d'autres anneaux 40a. Les trios sont en outre séparés l'un de l'autre par un anneau 40b.

Les anneaux 40a ont ici en section axiale une forme générale en L et l'anneau 40b a ici en section axiale une forme générale en U. L'anneau 40b définit ainsi un espace annulaire 43 débouchant radialement vers l'extérieur et situé entre les deux trios de segments 38.

Les anneaux 40a, 40b sont engagés par coulissement sur la surface 35 et sont serrés axialement les uns contre les autres entre le rebord 36 sur lequel l'anneau 40a le plus en amont prend appui axialement, et un écrou 41 qui est vissé sur le filetage 37 et prend appui axialement sur l'anneau 40a le plus aval.

Les segments 38 sont conformés et dimensionnés pour autoriser leurs déplacements radiaux en fonctionnement dans les fentes 39. Ils ont en section axiale une forme générale rectangulaire dont les coins sont de préférence arrondis convexe pour limiter l'usure par contact des anneaux 40a, 40b ainsi que de l'arbre 8. De préférence, ils comprennent chacun une surface périphérique externe d'appui ayant en section une forme incurvée convexe, de façon à accepter des désalignements des arbres 3, 8. Chaque segment a un diamètre interne qui est compris entre les diamètres interne et externe des fentes 39, et un diamètre externe qui est supérieur au diamètre externe des fentes et qui est légèrement inférieur au diamètre interne des pistes cylindriques 42 sur lesquelles sont en appui radial les segments.

Dans l'exemple représenté, la partie d'extrémité amont de l'arbre d'entrée 8, qui s'étend autour de la branche 15b, comprend, entre les deux pistes cylindriques 42, une cavité annulaire 44 débouchant radialement vers l'intérieur et alignée radialement avec l'espace 43 précité s'étendant entre les trios de segments 38. Une rangée annulaire d'orifices 45 de passage d'huile (flèche 46) est formée au fond de cette cavité 44 pour permettre le retour d'huile par centrifugation à l'intérieur de l'enceinte E1. La cavité 44 et les orifices 45 forment ainsi des moyens d'évacuation d'huile.

Les pistes 42 sont avantageusement durcies par un revêtement particulier ou un traitement particulier, limitant son usure par contact et frottement avec les segments 38.

La piste cylindrique 42 située à l'amont est reliée par son extrémité amont à une surface tronconique 47 évasée vers l'amont qui permet de faciliter une étape de montage de la turbomachine, par insertion de la partie d'extrémité aval de la branche 15b radialement à l'intérieur de l'arbre 8.

Les figures 8 et 9 illustrent des variantes de réalisation.

La figure 8 montre des moyens d'étanchéité à trois segments 38 dont deux forment une paire et sont situés à l'amont de la cavité 44, et un autre est situé à l'aval de cette cavité.

La figure 9 montre également des moyens d'étanchéité à trois segments 38 mais qui forment un trio situé à l'amont de la cavité 44. L'anneau 40a' situé entre le segment 38 le plus aval et l'écrou 41 comprend une nervure annulaire radialement externe 48, qui s'étend sensiblement au droit des orifices 45. Cette nervure 48 est configurée pour favoriser l'écoulement d'huile par centrifugation en fonctionnement jusque dans la cavité 44.

En conclusion, l'étanchéité rotor/rotor de l'enceinte E1 est réalisée par les segments 38, qui s'étendent de préférence en continu sur 360°, et qui sont portés par le capot 15 formant une épingle souple afin que l'étanchéité puisse absorber les disparités radiales de l'arbre d'entrée 8 du réducteur 7. Ces disparités radiales peuvent varier de plusieurs millimètres, par exemple jusqu'à 3mm et de préférence de l'ordre de 1,5mm. Le capotage 31 permet de récupérer l'huile au plus près du réducteur 7 et de minimiser les éclaboussures d'huile vers les moyens d'étanchéité 14. La nervure 34 vient consolider le capot 15 comme raidisseur et aussi comme cloison de protection des moyens d'étanchéité 14.

Les segments 38 sont par exemple en carbone ou en fonte.

En variante, les segments pourraient être fendus, voire remplacés par des joints annulaires à brosses ou des bagues flottantes.

En plus des avantages décrits dans ce qui précède, l'invention est utile dans la mesure où elle permet de conserver un montage modulaire de la turbomachine, tel que décrit dans la demande WO-A1-2015/075345, ainsi que le principe de fermeture étanche de l'enceinte avant E1, comme décrit dans la demande WO-A1-2015/075355.

## Revendications

1. Turbomachine (1) d'aéronef d'axe longitudinal A, comportant un réducteur (7), au moins un arbre de turbine (4) dont une extrémité amont est reliée à un arbre d'entrée (8) du réducteur (7), une soufflante (S) dont un arbre (3) est relié à un arbre de sortie (9) du réducteur, et des moyens (14) d'étanchéité dynamique entre ledit arbre d'entrée du réducteur et ledit arbre de soufflante, **caractérisée en ce que** lesdits moyens d'étanchéité comprennent un capot annulaire (15) à section axiale sensiblement en U dont une branche annulaire externe (15a) est fixée audit arbre de soufflante et dont une branche annulaire interne (15b) porte au moins un joint annulaire d'étanchéité coopérant avec ledit arbre d'entrée du réducteur, ledit capot étant élastiquement déformable en direction radiale par rapport audit axe A.

2. Turbomachine (1) selon la revendication 1, dans laquelle ledit capot (15) en U définit une ouverture annulaire débouchant axialement vers l'aval.

3. Turbomachine (1) selon la revendication 1 ou 2, dans laquelle ladite branche annulaire externe (15a) comprend une extrémité aval de fixation audit arbre de soufflante (3).

4. Turbomachine (1) selon la revendication 3, dans laquelle ladite branche annulaire externe (15a) et ledit arbre de soufflante (3) définissent entre eux un espace annulaire (23) d'écoulement de fluide qui est en communication fluidique avec des orifices (24) formés dans ledit arbre de soufflante (3).

5. Turbomachine (1) selon la revendication 3 ou 4, dans laquelle l'extrémité aval de ladite branche annulaire externe (15a) comprend des orifices (30) de passage d'huile.

6. Turbomachine (1) selon l'une des revendications 3 à 5, dans laquelle l'extrémité aval de ladite branche annulaire externe (15a) porte un capotage annulaire (31) s'étendant radialement vers l'intérieur et configuré pour limiter les projections d'huile et/ou assurer l'écoulement d'huile.

7. Turbomachine (1) selon l'une des revendications 1 à 6, dans laquelle ladite branche annulaire interne (15b) comprend ou porte une nervure annulaire radialement externe (34) configurée pour limiter les projections d'huile et/ou assurer l'écoulement d'huile.

8. Turbomachine (1) selon l'une des revendications 1 à 7, dans laquelle ladite branche annulaire interne (15b) s'étend au moins en partie radialement à l'intérieur dudit arbre d'entrée (8) du réducteur (7).

9. Turbomachine (1) selon l'une des revendications 1 à 8, dans laquelle ledit au moins un joint annulaire comprend des segments annulaires (38) d'étanchéité qui sont chacun montés coulissant en direction radiale dans des fentes annulaires (39) de ladite branche annulaire interne (15b) et qui sont configurés pour prendre appui à leur périphérie externe sur ledit arbre d'entrée (8) du réducteur (7).

10. Turbomachine (1) selon l'une des revendications 1 à 9, dans laquelle ledit arbre d'entrée (8) du réducteur (7) comprend au moins une piste cylindrique (42) durcie destinée à coopérer avec ledit au moins un joint, et/ou des orifices radiaux (45) traversants de passage d'huile.

## Patentansprüche

1. Turbomaschine (1) eines Flugzeugs mit Längsachse A, umfassend einen Reduktor (7), mindestens eine Turbinenwelle (4), bei der ein stromaufwärtiges Ende mit einer Eingangswelle (8) des Reduktors (7) verbunden ist, ein Gebläse (S), bei dem eine Welle (3) mit einer Ausgangswelle (9) des Reduktors verbunden ist, und Mittel (14) zur dynamischen Dichtung zwischen der Eingangswelle des Reduktors und der Gebläsewelle, **dadurch gekennzeichnet, dass** die Dichtungsmittel eine ringförmige Kappe (15) mit einem im Wesentlichen U-förmigen axialen Querschnitt umfassen, bei denen ein äußerer ringförmiger Schenkel (15a) an der Gebläsewelle befestigt ist und bei denen ein innerer ringförmiger Schenkel (15b) mindestens eine ringförmige Dichtung trägt, die mit der Eingangswelle des Reduktors zusammenwirkt, wobei die Kappe in Bezug auf die Achse A in radialer Richtung elastisch verformbar ist.

2. Turbomaschine (1) nach Anspruch 1, wobei die U-förmige Kappe (15) eine ringförmige Öffnung definiert, die axial in eine stromabwärtigen Seite mündet.

3. Turbomaschine (1) nach Anspruch 1 oder 2, wobei der äußere ringförmige Schenkel (15a) ein stromabwärtiges Ende zum Befestigen an der Gebläsewelle (3) umfasst.

4. Turbomaschine (1) nach Anspruch 3, wobei der äußere ringförmige Schenkel (15a) und die Gebläsewelle (3) untereinander einen ringförmigen Raum (23) zum Abfließen von Fluid definieren, der mit den in der Gebläsewelle (3) gebildeten Bohrungen (24) in Fluidkommunikation steht.

5. Turbomaschine (1) nach Anspruch 3 oder 4, wobei das stromabwärtige Ende des äußeren ringförmigen Schenkels (15a) Bohrungen (30) zum Durchführen von Öl umfasst.

6. Turbomaschine (1) nach einem der Ansprüche 3 bis 5, wobei das stromabwärtige Ende des äußeren ringförmigen Schenkels (15a) eine ringförmige Verkleidung (31) trägt, die ich radial nach innen erstreckt und konfiguriert ist, um die Ölspritzer zu begrenzen und/oder den Ölabfluss zu gewährleisten.

7. Turbomaschine (1) nach einem der Ansprüche 1 bis 6, wobei der innere ringförmige Schenkel (15b) eine radial äußere ringförmige Rippe (34) umfasst oder trägt, die konfiguriert ist, um die Ölspritzer zu begrenzen und/oder den Ölabfluss zu gewährleisten.

8. Turbomaschine (1) nach einem der Ansprüche 1 bis 7, wobei sich der innere ringförmige Schenkel (15b) mindestens teilweise radial innerhalb der Eingangswelle (8) des Reduktors (7) erstreckt.

9. Turbomaschine (1) nach einem der Ansprüche 1 bis 8, wobei die mindestens eine ringförmige Dichtung ringförmige Dichtungssegmente (38) umfasst, die jeweils gleitend in radialer Richtung in ringförmigen Schlitzen (39) des inneren ringförmigen Schenkels (15b) montiert sind und die konfiguriert sind, um an ihrem Außenumfang auf der Eingangswelle (8) des Reduktors (7) aufzuliegen.

10. Turbomaschine (1) nach einem der Ansprüche 1 bis 9, wobei die Eingangswelle (8) des Reduktors (7) mindestens eine gehärtete zylindrische Piste (42), die dazu vorgesehen ist, mit der mindestens einen Dichtung zusammenzuwirken, und/oder radiale Bohrungen (45), die die Öldurchführung durchqueren, umfasst.

## Claims

1. An aircraft turbomachine (1) having a longitudinal axis A, comprising a reduction gear (7), at least one turbine shaft (4), an upstream end of which is connected to an input shaft (8) of the reduction gear (7), a fan (S), a shaft (3) of which is connected to an output shaft (9) of the reduction gear, and dynamic sealing means (14) between said input shaft of the reduction gear and said fan shaft, **characterised in that** said sealing means comprise an annular cowling (15), the axial cross-section of which is substantially U-shaped, an outer annular leg (15a) of which is fastened to said fan shaft and an inner annular leg (15b) of which supports at least one annular seal co-operating with said input shaft of the reduction gear, said cowling being elastically deformable in the radial direction with respect to said axis A.

2. The turbomachine (1) according to claim 1, wherein said U-shaped cowling (15) defines an annular opening which opens axially downstream.

3. The turbomachine (1) according to claim 1 or 2, wherein said outer annular leg (15a) comprises a downstream end for fastening to said fan shaft (3).

4. The turbomachine (1) according to claim 3, wherein said outer annular leg (15a) and said fan shaft (3) define therebetween a fluid flow annular space (23) which is in fluidic communication with orifices (24) formed in said fan shaft (3).

5. The turbomachine (1) according to claim 3 or 4, wherein the downstream end of said outer annular leg (15a) comprises oil passage orifices (30).

6. The turbomachine (1) according to any one of claims 3 to 5, wherein the downstream end of said outer annular leg (15a) supports an annular cover (31) extending radially towards the inside and configured to limit the oil splashes and/or ensure the oil flow.

7. The turbomachine (1) according to any one of claims 1 to 6, wherein said inner annular leg (15b) comprises or supports a radially outer annular rib (34) configured to limit the oil splashes and/or ensure the oil flow.

8. The turbomachine (1) according to any one of claims 1 to 7, wherein said inner annular leg (15b) extends at least partly radially inside of said input shaft (8) of the reduction gear (7).

9. The turbomachine (1) according to any one of claims 1 to 8, wherein said at least one annular seal comprises sealing annular segments (38) which are each mounted with the ability to slide in a radial direction in annular slots (39) of said inner annular leg (15b) and which are configured to bear at their outer periphery against said input shaft (8) of the reduction gear (7).

10. The turbomachine (1) according to any one of claims 1 to 9, in which said input shaft (8) of the reduction gear (7) comprises at least one hardened cylindrical track (42) intended to cooperate with said at least one seal, and/or radial oil passage through-orifices (45).
